(19) Europäisches Patentamt
European Patent Office
Office européen des brevets

(11) **EP 4 139 632 B1**

(12) **FASCICULE DE BREVET EUROPEEN**

(45) Date de publication et mention
de la délivrance du brevet:
**05.06.2024 Bulletin 2024/23**

(21) Numéro de dépôt: **21719619.5**

(22) Date de dépôt: **16.04.2021**

(51) Classification Internationale des Brevets (IPC):
*G01C 11/06* $^{(2006.01)}$    *B64G 1/10* $^{(2006.01)}$
*G01S 13/86* $^{(2006.01)}$    *G01S 13/90* $^{(2006.01)}$
*G06T 7/30* $^{(2017.01)}$    *G06T 7/33* $^{(2017.01)}$
*G06T 7/593* $^{(2017.01)}$

(52) Classification Coopérative des Brevets (CPC):
**G01C 11/06; B64G 1/1021; B64G 1/1028;
B64G 1/1035; G01S 13/867; G06T 7/337;
G06T 7/593;** G01S 13/9021; G06T 2207/10012;
G06T 2207/10044

(86) Numéro de dépôt international:
**PCT/EP2021/059974**

(87) Numéro de publication internationale:
**WO 2021/213936 (28.10.2021 Gazette 2021/43)**

(54) **PROCÉDÉ DE CALAGE GÉOMÉTRIQUE D'IMAGES OPTIQUES**

VERFAHREN ZUR GEOMETRISCHEN REGISTRIERUNG OPTISCHER BILDER

METHOD FOR GEOMETRIC REGISTRATION OF OPTICAL IMAGES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.04.2020 FR 2004045**

(43) Date de publication de la demande:
**01.03.2023 Bulletin 2023/09**

(73) Titulaire: **Airbus Defence and Space SAS
31402 Toulouse Cedex 4 (FR)**

(72) Inventeur: **NONIN, Philippe
31400 TOULOUSE (FR)**

(74) Mandataire: **Ipside
6, Impasse Michel Labrousse
31100 Toulouse (FR)**

(56) Documents cités:
**US-A1- 2012 127 028    US-A1- 2016 259 046**

- **Hongxing Liu ET AL: "Correction of positional
errors and geometric distortions in topographic
maps and DEMs using a rigorous SAR simulation
technique", Photogrammetric Engineering &
Remote Sensing [H.W. Wilson - AST], 1
septembre 2004 (2004-09-01), pages 1031-1042,
XP055231053, DOI: 10.14358/PERS.70.9.1031
Extrait de l'Internet:
URL:http://www.asprs.org/a/publications/pe
rs/2004journal/september/2004_sep_1031-104
2.pdf [extrait le 2015-11-25]**

**Description**

**Domaine technique de l'invention**

La présente invention concerne un procédé avancé de calage géométrique d'images optiques. Plus particulièrement, l'invention concerne un procédé permettant de caler des images acquises par de capteurs optiques hautes résolutions embarqués à bord d'engins d'observation de la surface de la Terre.

**Technique antérieure**

Les dernières générations de capteurs optiques embarqués à bord de satellites offrent des résolutions spatiales très élevées pouvant atteindre une résolution de cinquante centimètres à trente centimètres. Lors d'une prise de vue réalisée par un capteur optique embarqué à bord d'un satellite, l'image acquise est obtenue dans le référentiel géométrique du capteur, c'est-à-dire le référentiel géométrique dans lequel se situe la caméra au moment d'acquérir l'image. Ce référentiel dépend donc essentiellement de la position de la caméra et de son orientation. On parle ainsi de position orbitale et d'attitude de la caméra s'agissant d'une caméra embarquée à bord d'un satellite.

L'estimation précise de la position orbitale d'une caméra embarquée à bord d'un satellite peut être obtenue à postériori assez facilement. Malheureusement, l'estimation de l'attitude de cette même caméra est beaucoup plus difficile à obtenir et les valeurs obtenues induisent des erreurs de localisation au sol des images capturées par la caméra bien supérieures à la résolution spatiale attendues pour ce type d'images. À titre d'exemple les erreurs de localisation d'images issues des satellites optiques d'observation de la Terre connus peuvent être supérieures à quatre mètres.

Pour contourner ce problème de connaissance à priori de l'attitude de la caméra, on utilise en général une technique parfaitement connue de l'état de l'art en photogrammétrie, dite d'ajustement de faisceaux ou selon la terminologie anglo-saxonne communément utilisée, dite technique de 'bundle adjustment'. Les techniques d'ajustement de faisceaux consistent à combiner simultanément des points définis dans un repère tridimensionnel ou '3D' définissant la géométrie de la scène, des paramètres représentatifs du déplacement relatif de la caméra et des caractéristiques géométriques internes de la caméra utilisée pour l'acquisition de l'image, afin d'obtenir un optimum représentatif de la projection de ces points 3D dans l'image.

Les techniques de calage d'image par ajustement de faisceaux utilisent donc des points à la surface du globe dont les coordonnées 3D sont connues précisément et dont il est possible de retrouver la position dans l'image capturée par le capteur optique. Ces points dits point d'appuis ou encore 'Ground Control Point' selon la terminologie anglo-saxonne usuelle, sont produits par des techniques de relevés au sol des coordonnées planimétriques et altimétriques du point remarquable identifié, souvent accompagnée d'une vignette d'image représentant une vue aérienne ou satellite du point considéré. De la précision planimétrique et altimétrique des points utilisés et de leur répartition géographique dans l'image dépendent la précision de calage de l'image obtenue par ce procédé d'ajustement de faisceaux. À ce jour, les bases de données de calage disponibles de couverture géographique mondiale ont une précision de localisation absolue d'environ trois mètres.

Les nouveaux capteurs optiques, de très haute résolution, embarqués dans les satellites d'observation de la Terre aux résolutions attendues de cinquante centimètres à trente centimètres entrent dans les domaines d'application autrefois couverts par la photographie aérienne. Leur exploitation optimale exige donc une précision de localisation compatible avec ces applications, c'est-à-dire de l'ordre du mètre. Le calage de ces images pour atteindre les précisions de localisation souhaitées exige des points d'appuis de précision planimétrique égale à un mètre voire moins. Une collecte ponctuelle manuelle de points d'appuis à la précision souhaitée est possible pour un jeu d'images optiques donné mais cela est très onéreux et ne peut être raisonnablement envisagé pour obtenir une couverture mondiale nécessaire au calage d'images acquises en tout point du globe terrestre par une constellation de satellites d'observation de la surface de la Terre ou par tout autre moyen d'acquisition embarqué à bord d'un drone ou d'un aéronef.

Il est donc nécessaire de trouver un procédé permettant de caler précisément des images optiques de très hautes résolutions acquises en tout point du globe terrestre acquises par une constellation de satellites d'observation de la surface de la Terre ou par tout autre moyen d'acquisition embarqué à bord d'un drone ou d'un aéronef de la manière la plus automatisée possible et ceci en tout endroit du globe terrestre où un calage est possible. Il est également nécessaire de trouver un procédé qui n'exige pas l'utilisation d'une base de données de points de calage spécifiques.

Le document US 2012/127028 A1 décrit un procédé de calage d'images optiques prises par un satellite d'observation de la Terre dans lequel une image de référence de type radar SAR d'une zone imagée par le satellite et un couple stéréoscopique d'images provenant des images optiques prises par le satellite et comportant un chevauchement avec ladite zone imagée sont utilisées pour caler géométriquement l'une des images optiques du couple stéréoscopique d'images.

Le document de littérature "Hongxing Liu et AL: "Correction of positional errors and geometric distortions in topographie maps and DEMs using a rigorous SAR simulation technique", Photogrammetric Engineering & Remote Sensing, 1 septembre 2004 (2004-09-01), pages 1031-1042" décrit un procédé de correction d'un modèle numérique d'élévation (DEM) d'une zone donnée basé sur la comparaison entre une image radar SAR simulée de la zone donnée et une image radar SAR de référence.

Le document US 2016/259046 A1 décrit un procédé et un système de génération d'une image radar SAR simulée à partir d'un modèle numérique de terrain 3D.

## Présentation de l'invention

La présente invention vise à remédier aux inconvénients des procédés de calage d'images optiques connus avec une approche totalement novatrice.

A cet effet, selon un premier aspect, la présente invention se rapporte à un procédé, selon la revendication 1, de calage d'au moins une première image optique de la surface de la Terre prise par un capteur optique embarqué à bord d'un satellite ou à bord d'un aéronef, le procédé de calage comprenant les étapes de : obtention d'un couple stéréoscopique d'images optiques comportant la première image optique; obtention d'au moins une image radar de référence prise par un capteur radar à synthèse d'ouverture, l'emprise au sol de l'au moins un image radar de référence comportant une zone de chevauchement avec l'emprise au sol des images du couple stéréoscopique d'images optiques ; et de sélection d'au moins une aire d'intérêt sur la zone de chevauchement.

Pour chacune des aires d'intérêt, le procédé comprend les étapes de : obtention d'un modèle 3D sur l'aire d'intérêt à partir du couple stéréoscopique d'images optiques ; calcul d'au moins une image radar simulée sur l'au moins une aire d'intérêt à partir du modèle 3D obtenu et les paramètres d'acquisitions de l'au moins une image radar de référence ; estimation d'un décalage géométrique entre l'au moins une image radar simulée et l'au moins une image radar de référence; sélection d'au moins un point de calage sur le modèle 3D de l'aire d'intérêt ; projection du au moins un point de calage dans l'au moins une image radar de référence par une fonction de projection radar de sorte à obtenir au moins un point de liaison radar ; correction du au moins un point de liaison radar par application du décalage géométrique estimée de sorte à obtenir au moins un point de liaison radar corrigé ; et détermination d'au moins un couple de points de liaison du couple stéréoscopique d'images optiques par projection dudit au moins point de calage dans chaque image dudit couple stéréoscopique d'images optiques.

Finalement, le procédé comprend une étape de calage géométrique de la dite au moins une première image optique à partir d'au moins le couple de points de liaison optique et de l'au moins un point de liaison radar corrigé.

L'invention est mise en oeuvre selon les modes de réalisation et les variantes exposées ci-après, lesquelles sont à considérer individuellement ou selon toute combinaison techniquement opérante.

Avantageusement, l'étape de calage géométrique peut comprendre une unique étape d'ajustement de faisceaux appliquée simultanément au couple stéréoscopique d'images optiques et à l'au moins une image radar de référence.

L'étape d'estimation du décalage géométrique peut comprendre la maximisation de la probabilité conditionnelle du décalage connaissant l'au moins une image radar de référence.

L'étape de calcul de l'au moins une mage radar simulée peut comprendre la détermination d'un facteur de réflectance moyen de l'au moins une image radar de référence calculé sur l'aire d'intérêt considérée pour le calcul de l'au moins une mage radar simulée.

Chaque aire d'intérêt de la zone de chevauchement peut être une zone restreinte de la zone de chevauchement. L'étape de sélection d'au moins une aire d'intérêt peut comporter au moins deux aires d'intérêt, de préférence quatre aires d'intérêt.

L'étape d'obtention d'un modèle 3D peut être réalisée sur la totalité de la zone de chevauchement, préalablement à l'étape de sélection d'au moins une aire d'intérêt sur la zone de chevauchement

L'étape de calage géométrique à partir d'au moins le couple de points de liaison (optique et de l'au moins un point de liaison radar corrigé peut être réalisée sur les deux images du couple stéréoscopique d'images optiques de manière simultanée.

Selon un second aspect, la présente invention se rapporte à un système, selon la revendication 9, de calage géométrique d'au moins une image optique pour la mise en oeuvre du procédé de calage d'au moins une première image optique de la surface de la Terre décrit ci-dessus, le système comportant une unité de traitement d'informations et une mémoire vive associée à l'unité de traitement d'informations, ladite mémoire vive comprenant des instructions de mise en oeuvre du procédé, la dite unité de traitement d'informations étant configurée pour exécuter les instructions mettant en oeuvre le procédé.

Selon un troisième aspect, la présente invention se rapporte à un produit programme d'ordinateur, selon la revendication 10, comprenant des instructions qui, lorsque le programme est exécuté par un ordinateur, conduisent celui-ci à mettre en oeuvre les étapes du procédé de calage d'au moins une image optique décrit ci-dessus.

Selon un quatrième aspect, la présente invention se rapporte à un support de stockage d'informations, selon la revendication 11, stockant un programme d'ordinateur comprenant des instructions pour implémenter, par un processeur, le procédé décrit ci-dessus, lorsque ledit programme est lu et exécuté par ledit processeur.

**Brève description des figures**

D'autres avantages, buts et caractéristiques de la présente invention ressortent de la description qui suit faite, dans un but explicatif et nullement limitatif, en regard des dessins annexés, dans lesquels :

[Fig. 1] la figure 1 est une représentation schématique d'un exemple non limitatif d'obtention d'un couple stéréoscopique d'images optiques nécessaire au procédé de calage d'au moins une image optique du couple stéréoscopique.

[Fig. 2] la figure 2 est une représentation schématique d'un exemple non limitatif d'obtention d'une image SAR de référence nécessaire au procédé de calage d'au moins une image optique du couple stéréoscopique.

[Fig. 3] la figure 3 est une représentation schématique de l'obtention d'un modèle 3D sur une aire d'intérêt d'une zone de recouvrement entre le couple stéréoscopique d'images optiques et l'image SAR de référence selon l'invention.

[Fig. 4] la figure 4 est une représentation schématique de l'obtention d'une image SAR simulée selon l'invention.

[Fig. 5] la figure 5 est une représentation schématique de la détermination du décalage géométrique entre l'image SAR simulée et l'image SAR de référence selon l'invention.

[Fig. 6] la figure 6 est une représentation schématique de la sélection de points de calage sur le modèle 3D selon l'invention.

[Fig. 7] la figure 7 est une représentation schématique de la détermination des points de liaison des images optiques par depuis le modèle 3D selon l'invention.

[Fig. 8] la figure 8 est une représentation schématique de la détermination des points de liaison des images radar par projection depuis le modèle 3D selon l'invention.

[Fig. 9] la figure 9 est une vue schématique du procédé d'ajustement de faisceau du procédé de calage d'au moins une image optique.

[Fig. 10] la figure 10 est un exemple d'un organigramme du procédé de calage d'au moins une image optique selon l'invention.

[Fig. 11] la figure 11 est un exemple d'organigramme de l'étape de calcul du calage géométrique du procédé de la figure 10.

[Fig. 12] la figure 12 est une représentation schématique d'un exemple de système de mise en oeuvre du procédé de calage d'au moins une image optique selon la figure 10.

**Description des modes de réalisation**

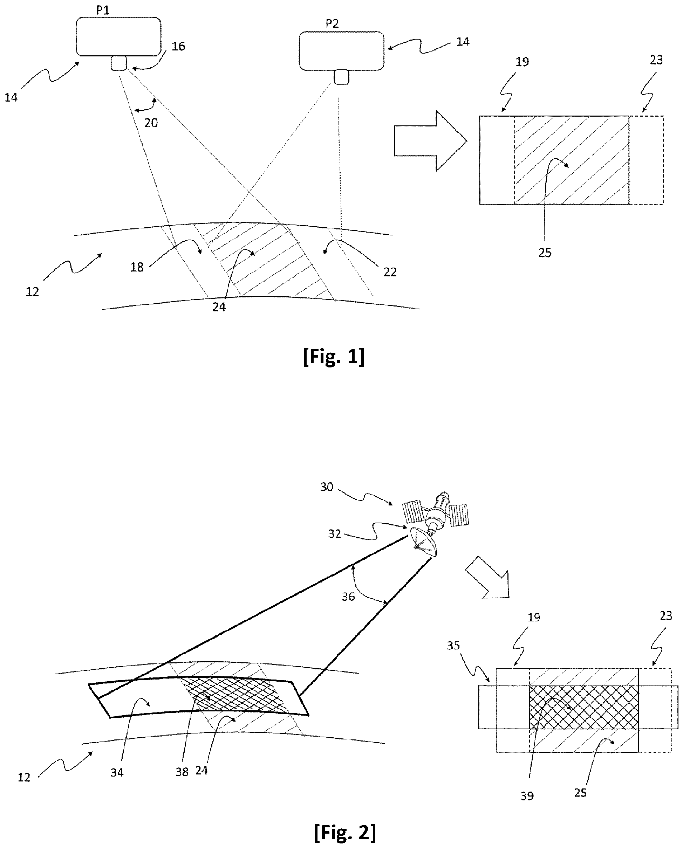

Selon la figure 1, un procédé de calage d'au moins une première image optique 19 dont l'emprise au sol représente une première zone 18 de la surface de la Terre 12, nécessite l'obtention d'une seconde image optique 23 dont l'emprise au sol représente une seconde zone 22 de la surface de la Terre 12, la première zone 18 et la seconde zone 22 comportant une zone commune 24 de la surface de la Terre 12. En d'autres termes, la première image optique 19 et la seconde image optique 23 forment un couple stéréoscopique d'images optiques 19, 23 comportant une emprise au sol commune 25 aux emprises au sol des images optiques représentative de la zone commune 24 de la surface de la Terre 12.

À titre d'exemple non limitatif, et selon la figure 1, le couple stéréoscopique d'images optique 19, 23 peut provenir d'une première acquisition et d'une seconde acquisition respectivement de la première image optique 19 et de la seconde image optique 23 par un capteur optique 16 haute résolution embarqué dans un engin volant 14 d'observation de la surface de la Terre 12 tel que par exemple et de manière non limitative, un satellite d'observation de la surface de la Terre 12, ou tout autre type d'aéronefs tel qu'un avion d'observation de la surface de la Terre, un drone d'observation de la surface de la Terre ou un engin stratosphérique d'observation de la surface de la Terre.

Selon la figure 1, à des fin d'acquisition du couple stéréoscopique d'images optiques 19, 23, l'engin volant 14 d'observation de la surface de la Terre 12 est tout d'abord localisé à une première position P1 de sorte à permettre l'acquisition de la première image optique 19 du couple stéréoscopique d'images optiques 19, 23 selon un premier angle de vue et selon le champ de vision 20 du capteur optique 16, puis l'engin volant 14 d'observation de la surface de la Terre 12 est localisé à une seconde position P2 distincte de la première position P1 de sorte à permettre l'acquisition de la seconde image optique 23 du couple stéréoscopique d'images optiques 19, 23 selon un second angle de vue distinct du premier angle de vue.

De manière alternative, l'acquisition du couple stéréoscopique d'images optiques 19, 23 peu également avoir été réalisée par deux engins volant 14 d'observation de la surface de la Terre 12 comportant chacun un capteur optique comprenant des caractéristiques de prise de vue identiques ou similaires au capteur optique de l'autre engin volant.

Il est à noter que le processus de calage d'au moins une première image optique 19 selon l'invention est indépendant de tout processus d'acquisition du couple stéréoscopique d'images optiques 19, 23. A cet égard, l'obtention du couple stéréoscopique d'images optiques 19, 23 nécessaire au calage d'au moins une des images optiques 19 du couple stéréoscopique d'images optiques 19, 23 peut également être issu d'une ou plusieurs bases de données ou d'archives d'images optiques issues du même capteur optique, de capteurs de même nature ou de natures différentes dans la mesure où les résolutions sont comparables. Une sélection de la seconde image optique 23 formant le couple d'images stéréoscopiques avec la première image optique 19 depuis au moins une base de données d'images optiques peut être réalisée. Cette sélection prend en compte l'emprise au sol de la première image optique 19 et l'emprise au sol de la seconde image optique 23 de sorte à former le couple stéréoscopique d'images optiques 19, 23 selon un angle stéréoscopique approprié défini par le rapport base/ hauteur (B/H) du triangle formé par les 2 capteurs et la scène observée. De préférence, cette sélection peut prendre en compte les éventuelles contraintes de prise de vue de chacune des images optiques 19, 23 du couple stéréoscopique d'images optiques 19, 23 telles que par exemple et de manière non limitative, la date et l'horaire des acquisitions, la présence de nuage, etc⋯

Selon la figure 2, le procédé de calage d'au moins la première image optique 19 nécessite l'obtention d'au moins une image radar de référence 35 dont l'emprise au sol représente une troisième zone 34 de la surface de la Terre 12. L'image radar de référence 35 est obtenue de telle façon à ce que la zone 34 de la surface de la Terre 12 qu'elle représente chevauche la zone commune 24 de la surface de la Terre 12 couverte par le couple d'images optiques 19, 23.

Chaque image radar de référence 35 est issue d'un capteur radar 32 à synthèse d'ouverture. Selon la suite de l'exposé, toutes les images radars acquises par un capteur radar 32 à synthèse d'ouverture seront dénommées images SAR, l'acronyme 'SAR' signifiant, selon la terminologie anglo-saxonne, 'Synthetic Aperture Radar'. A cet effet, l'image radar de référence sera dénommée image SAR de référence 35.

L'acquisition d'une image SAR 35 consiste à mesurer le rayonnement des ondes émises par le capteur radar SAR 32 après leurs réflexions sur la surface de la Terre 12 alors que l'acquisition d'une image optique 19 consiste à mesurer le rayonnement solaire réfléchi par chaque point situé dans le champ de vision 20 du capteur optique 16.

À titre d'exemple non limitatif, et selon la figure 2, chaque image SAR de référence 35 peut provenir d'une acquisition par un capteur radar 32 à synthèse d'ouverture embarqué dans un satellite radar 30 d'observation de la surface de la Terre 12. Le satellite radar 30 permet l'acquisition d'une image SAR de référence 35 représentative de la zone 34 de la surface de la Terre 12 couverte par le champ d'observation 36 du capteur radar SAR 32. Compte tenu de leur mode d'obtention, chaque image SAR de référence 35 a la particularité de comporter une zone de chevauchement 39 entre son emprise au sol et l'emprise au sol commune 25 aux emprises au sol des images optiques 19, 23, la zone de chevauchement 39 pouvant être distincte d'une image SAR de référence 35 à une autre.

Alternativement, chaque image SAR de référence 35 peut provenir d'une acquisition par un capteur radar 32 à synthèse d'ouverture embarqué dans tout autre type d'aéronefs tel qu'un avion d'observation de la surface de la Terre 12, un drone d'observation de la surface de la Terre 12 ou un engin stratosphérique d'observation de la surface de la Terre 12.

Il est à noter que le procédé de calage d'au moins une première image optique 19 selon l'invention est indépendant de tout processus d'acquisition des images SAR de référence 35. À cet égard, l'obtention de l'au moins une image SAR de référence 35 nécessaire au calage d'au moins une des images optiques 19 du couple stéréoscopique d'images optiques 19, 23 peut également être issue d'une base de données ou d'archives d'images SAR. La sélection de l'image SAR de référence 35 depuis une base de données d'images SAR peut être réalisée en prenant en compte son emprise au sol de sorte à former une zone de chevauchement 39 avec l'emprise au sol zone commune 25 aux emprises au sol des images optiques 19 et 23.

Il est à noter que la localisation au sol d'une image SAR de référence 35 ne dépend que de l'estimation de la position orbitale du capteur radar SAR 32. La position orbitale du capteur radar SAR 32 est une donnée suffisamment précise dont l'erreur induite sur la localisation des images SAR est inférieure au mètre pour les capteurs récents.

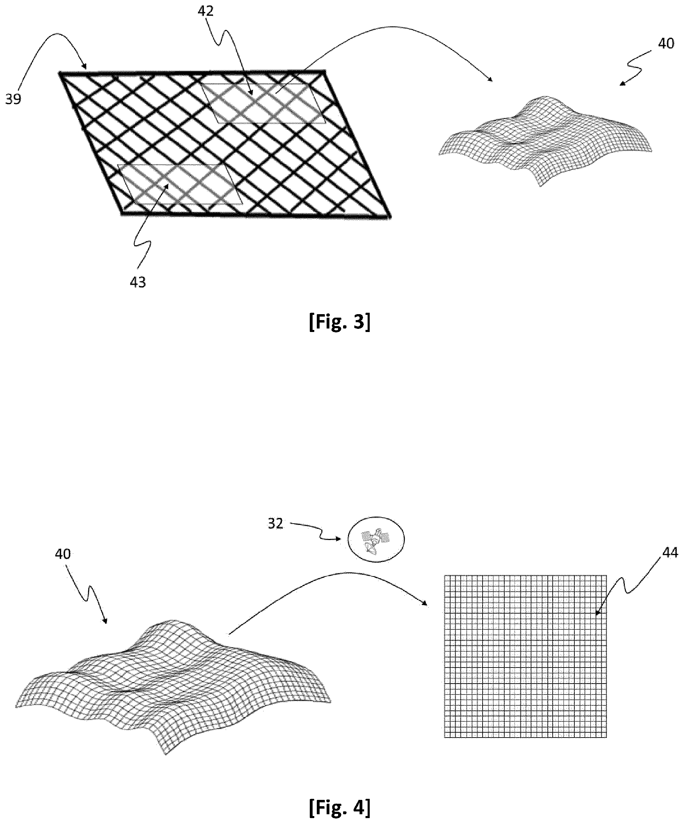

Selon la figure 3, le procédé de calage d'au moins la première image optique 19 nécessite la détermination d'au moins un premier modèle tridimensionnel dénommé premier modèle 3D d'image 40 à partir du couple stéréoscopique d'images optiques 19, 23.

De manière générale, la génération d'un modèle 3D 40 repose sur une technique bien connue dont la mise en oeuvre comprend notamment une étape d'appariement des lignes de visée des deux images optiques 19, 23 du couple stéréoscopique, puis leur triangulation. En d'autres termes, la génération d'un modèle 3D 40 est obtenue par un traitement des images optiques 19, 23 du couple stéréoscopique selon un traitement de concordances stéréoscopiques, dénommée usuellement selon la terminologie anglo-saxonne 'stéréo matching'. Le modèle 3D 40 obtenu peut-être de différentes natures en fonction des sorties du procédé de concordances stéréoscopiques, comme par exemple et de manière non limitative : un nuage de points (encore selon le terme anglo-saxon « point-cloud ») en trois dimensions issus de la localisation en trois dimensions des points dit points homologues identifiés dans le processus de concordances stéréoscopiques ; ou encore une grille représentative d'un échantillonnage régulier de la partie commune 25 entre les deux images optiques 19, 23 du couple stéréoscopique à partir des points tridimensionnels obtenus par le processus de concordances stéréoscopiques ; ou encore un réseau de triangles irréguliers, dénommé selon la terminologie anglo-saxonne 'triangulated irregular network' selon l'acronyme 'TIN', ou encore tout maillage de surface quelconque.

Un référentiel géométrique possible du premier modèle 3D 40 obtenu par le processus de concordances stéréoscopiques peut être le référentiel objet, c'est-à-dire le référentiel lié au terrain observé. Ce référentiel, dit référentiel objet, comporte une incertitude liée aux incertitudes géométriques du couple stéréoscopique d'images optiques 19, 23 liées notamment aux erreurs d'estimation de l'attitude du capteur optique 16.

De manière alternative, la source de points tridimensionnels du modèle 3D 40 obtenu par le processus de concordances stéréoscopiques peut être un produit intermédiaire de la corrélation stéréoscopique du couple d'images optiques 19, 23, c'est-à-dire une carte de disparité entre la première image optique 19 et la seconde image optique 23 du couple stéréoscopique. Selon cette alternative, la carte de disparité décrit la correspondance des projections, dans la première image optique 19 et dans la seconde image optique 23, de chaque point tridimensionnel du premier modèle 3D 40. Connaissant les modèles géométriques de prise de vue, c'est-à-dire les caractéristiques du capteur optique 16, ainsi que la position orbitale et l'attitude du capteur optique 16, le passage de la carte de disparité au référentiel objet est immédiat par triangulation.

Selon la figure 3, le premier modèle 3D est généré à partir de la zone de chevauchement 39. A cet effet, le procédé de calage d'au moins la première image optique 19 du couple stéréoscopique comprend, de préférence avant la détermination du premier modèle 3D 40, une sélection d'au moins une première aire d'intérêt 42, dénommée communément selon l'acronyme AOI selon la terminologie anglo-saxonne 'area of interest'. La sélection de l'au moins une première aire d'intérêt 42 est effectuée sur la zone de chevauchement 39 entre le couple stéréoscopique d'images optiques 19, 23 et l'image SAR de référence 35. L'au moins une première aire d'intérêt 42 représente une portion de la zone de chevauchement 39, de préférence une zone restreinte de la zone de chevauchement 39.

Le nombre d'aires d'intérêt 42, 43 nécessaire au procédé de calage géométrique d'images optiques 19, 23 peut dépendre de la complexité de la déformation au sol engendrée par les erreurs d'orientation des images optiques 19, 23 que l'on prévoit d'observer. De manière avantageuse, une sélection d'une pluralité d'aires d'intérêt 42, 43 sur la zone de chevauchement 39 permettant la génération d'une pluralité de modèles 3D 40 permet d'estimer au mieux les erreurs de calage d'au moins la première image optique 19, notamment si le capteur optique 14 ayant permis l'acquisition de la première image optique 19 a été soumis à un plus grand nombre de degrés de liberté de mouvement engendrant des déformations de l'image complexes. À titre d'exemple non limitatif, une sélection de quatre aires d'intérêt distinctes 42, 43 peut être un bon compromis.

Cependant, une sélection d'une seule aire d'intérêt 42 peut suffire notamment lorsque le capteur optique 14 ayant permis l'acquisition de la première image optique 19 n'a été soumis qu'à un roulis et un tangage engendrant une simple translation de l'image qu'on peut mesurer avec une seule aire d'intérêt.

La sélection des aires d'intérêt 42 peut être réalisée aussi bien par un opérateur par sélection dans la zone de chevauchement 39 entre les images optiques 19, 23 du couple stéréoscopique et l'image SAR de référence 35 que de manière automatique. La sélection d'aires d'intérêt 42, 43 peut prendre en compte la nature du terrain, notamment, par exemple et de manière non limitative, de sorte à éviter les plans d'eau, l'énergie électromagnétique rétrodiffusée des radars à synthèse d'ouverture sur les plans d'eau n'étant pas prévisible. Un avantage de la sélection d'au moins une aire d'intérêt 42 est l'allègement du calcul, et donc la durée du calcul, nécessaire pour générer le premier modèle 3D 40.

Ce mode préférentiel de sélection d'au moins une première aire d'intérêt 42, n'exclut pas une alternative de réalisation selon laquelle un unique modèle 3D 40 peut être généré sur toute la zone de chevauchement 39 préalablement à l'étape de sélection des aires d'intérêt.

Selon l'état de l'art connu, il n'existe pas de corrélation directe entre une image optique 19 et une image SAR 35. En effet, dans le cas d'images optiques 19, 23, le signal mesuré s'échelonne entre les longueurs d'ondes du visible et des longueurs d'ondes de l'infra-rouge, c'est-à-dire de longueurs d'ondes pouvant s'étaler de 0.4 micromètre à 3 micromètres, alors que la longueur d'onde d'un radar en bande X telle qu'usuellement utilisée pour l'observation de la surface de la Terre 12 est de l'ordre de 31 millimètres. On ne peut donc pas apparier simplement les points d'une image optique 19 avec ceux d'une image SAR 35 acquise par un capteur radar SAR 32 dans un but de trouver une relation géométrique entre le modèle géométrique de prise de vue de ladite image optique 19 et celui de ladite image SAR 35 à des fins de recalage de ladite image optique 19.

À cet effet et selon la figure 4, le procédé de calage d'au moins la première image optique 19 nécessite, pour chaque image SAR de référence 35, le calcul d'une image SAR simulée 44 sur l'au moins une première aire d'intérêt 42, à partir notamment de la combinaison du premier modèle 3D 40 issu du couple stéréoscopique d'images optiques 19, 23 et des paramètres d'acquisition de l'image SAR de référence 35.

Le calcul de chaque image SAR simulée 44 prend en compte le fait que l'énergie électromagnétique moyenne rétrodiffusée sur la surface du terrain modélisée par le premier modèle 3D 40 dépend de l'angle d'incidence du capteur radar SAR 32 sur le terrain modélisé par le premier modèle 3D 40 et la configuration géométrique du capteur radar SAR 32. En d'autres termes ; l'énergie électromagnétique moyenne rétrodiffusée dépend également de l'orientation du terrain modélisé par le premier modèle 3D 40 par rapport au front d'onde incident qu'aurait émis le capteur radar SAR 32. Plus particulièrement, connaissant la première aire d'intérêt 42 représentée par le premier modèle 3D 40 et la configuration géométrique du capteur radar SAR 32 au regard du terrain modélisé, l'énergie électromagnétique moyenne rétrodiffusée par tout élément de surface de terrain modélisé par le premier modèle 3D 40, c'est-à-dire le rayonnement de l'onde radar qu'aurait émis le capteur radar SAR 32 sur la surface de terrain modélisée par le premier modèle 3D 40, peut être calculée à une constante multiplicative près. Il est également à noter qu'une représentation triangulée suffisamment fine du relief modélisé dans le premier modèle 3D 40, permet de simuler fidèlement l'interaction onde/surface et sa représentation dans l'image SAR simulée 44.

À cet effet, l'énergie rétrodiffusée enregistrée dans une image SAR 35 dépend d'un coefficient fortement lié à l'angle de l'onde incidente du capteur radar SAR 32 sur le terrain, le coefficient étant déterminé selon la formule suivante,

$$\frac{C \times R}{\sin(i)}$$

, formule selon laquelle i représente l'angle de l'onde incidente sur le terrain modélisé par le premier modèle 3D 40, 'C' est un facteur de proportionnalité dépendant des caractéristiques du capteur radar SAR 32 telles que, par exemple et de manière non limitative, la distance entre le capteur radar SAR 32 et le terrain, ainsi que le gain d'antenne, R représente la réflectance de la surface du terrain au point considéré. Selon l'invention, il conviendra d'estimer un facteur R de réflectance constant sur l'ensemble du terrain représenté par le premier modèle 3D 40. Plus particulièrement, le facteur R de réflectance utilisé pour le calcul de l'image SAR simulée 44 est un facteur de réflectance moyen de l'image SAR de référence 35 calculé sur toute l'emprise de l'image SAR simulée 44 c'est-à-dire sur l'aire d'intérêt 42 considérée pour le calcul de ladite image SAR simulée 44.

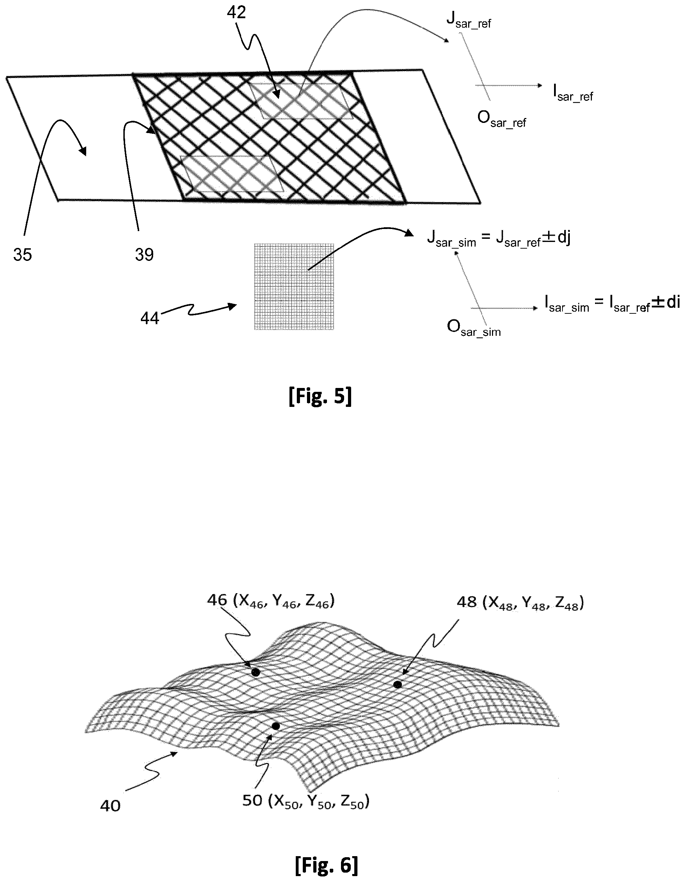

Selon la figure 5, le procédé de calage d'au moins la première image optique 19 nécessite une estimation du décalage géométrique di, dj de chaque image SAR simulé 44 par rapport à l'image SAR de référence 35 correspondante.

Il est à noter que l'image SAR simulée 44 est représentative de la première aire d'intérêt 42 ayant servie à la détermination du premier modèle 3D 44. Par conséquence, dans une hypothèse de sélection d'une pluralité d'aires d'intérêt 42, 43, le procédé de calage d'au moins la première image optique 19 nécessite une estimation du décalage di, dj de chaque image SAR simulée 44 représentative chacune d'une aire d'intérêt 42, 43 par rapport à l'image SAR de référence 35.

Il est connu de l'art antérieur de pouvoir estimer le décalage géométrique entre deux images comprenant une zone de chevauchement selon une approche par produit de corrélation entre les deux images. La mise en application de l'approche par produit de corrélation est une approche générique s'appliquant aussi bien aux images optiques qu'aux images radars.

Selon l'invention, de préférence une nouvelle méthode ou nouveau procédé d'estimation du décalage di, dj entre une image SAR simulé 44 et l'image SAR de référence 35 correspondante, dans le référentiel $O_{sar\_ref}$, $I_{sar\_ref}$, $J_{sar\_ref}$ de l'image SAR de référence 35 a été développée. Cette approche est particulièrement adaptée dans le cadre d'images SAR.

À cet effet, le nouveau procédé d'estimation du décalage di, dj selon l'invention comprend une estimation du décalage géométrique di, dj par maximisation de la probabilité conditionnelle du décalage di, dj connaissant l'image SAR de référence 35. On notera la probabilité conditionnelle du décalage géométrique di, dj connaissant l'image SAR de référence 35 par *P(di, dj/SAR)*. Selon le théorème de Bayes, la probabilité conditionnelle du décalage géométrique di, dj connaissant l'image SAR de référence 35 se calcule selon la formule :

$$P(di, dj/SAR) = P(SAR/di, dj) * P(di, dj) / P(SAR) \qquad (1)$$

Dans le contexte de l'invention, on suppose la probabilité à priori *P(di,dj)* constante sur un intervalle fini [-i, +i][-j, +j], la probabilité a priori *P(di,dj)* étant nulle au-delà des bornes de l'intervalle fini. Les bornes de l'intervalle fini [-i, +i][-j, +j] sont déterminées par l'incertitude maximale à priori de localisation des images optiques 19, 23 du couple stéréoscopique. Cette incertitude maximale à priori est traduite en décalage maximum de l'image SAR simulée 44 grâce à la fonction de localisation de l'image SAR de référence 35, c'est-à-dire grâce à la projection du terrain observé dans l'image SAR de référence 35.

Dans le contexte de l'invention, on remarque également que la probabilité à priori *P(SAR)* ne dépend pas du décalage géométrique di, dj. Cela revient à dire que l'opération consistant à maximiser la probabilité conditionnelle *P(di, dj/SAR)* du décalage géométrique di, dj connaissant l'image SAR de référence 35 est donc équivalente à maximiser *P(SAR/di, dj)* sur l'intervalle fini [-i, +i][-j, +j] préalablement défini. Cette dernière probabilité conditionnelle *P(SAR/di, dj)* revient à estimer la probabilité de l'image SAR de référence 35, connaissant l'espérance statistique de l'énergie rétrodiffusée en chaque pixel. Il est à noter que l'espérance de l'énergie rétrodiffusée a été déterminée à priori pour chaque pixel lors de la détermination de l'image SAR simulée 44 depuis le premier modèle 3D 40.

Par conséquent, sachant que les fluctuations résiduelles sont statistiquement indépendantes d'un pixel de l'image SAR de référence 35 à l'autre, on peut décomposer la probabilité conditionnelle *P(SAR/di,dj)* selon la formule suivante représentative du produit des probabilités $P_{a_i}$ des espérances statistiques de l'énergie rétrodiffusée $a_i$ pour chaque pixel i de l'image SAR simulée 44 :

$$P(SAR/di, dj) = \prod_i P_{a_i}(v_i) \ (2)$$

Selon la formule, $v_i$ représente l'amplitude du pixel i de l'image SAR de référence 35. Il est à noter que la distribution $P_a(v)$ est bien décrite par une loi de Nakagami, et pour une image SAR, dite image SAR multi vue, c'est-à-dire selon la terminologie anglo-saxonne 'multi-look' ou encore N Looks, cette loi est donnée par la formule :

$$P_a(v) = 2v^{2N-1}e^{-Nv^2/a} \frac{N^N}{(a^N(N-1)!)} \ (3)$$

. Dans le cas particulier d'une image 'single-look', cette expression se réduit à la loi bien connue de Rayleigh dont la formule est :

$$P_a(v) = \frac{2ve^{-v^2/a}}{a} \qquad (4)$$

L'estimation du décalage géométrique ou correction géométrique di, dj pour la première aire d'intérêt 42, revient alors à déterminer la valeur maximale parmi toutes les valeurs de la probabilité conditionnelle *P(SAR/di,dj)* calculée sur l'intervalle [-i, +i][-j, +j] préalablement prédéfini.

Il est à noter que l'image SAR de référence 35 utilisée par le présent procédé peut être indifféremment une image SAR simple vue ou une image SAR multi-vue. L'image SAR multi-vue étant une technique de traitement à postériori d'une image radar permettant de réduire la présence d'un bruit multiplicatif dans l'image, appelé chatoiement (en anglais speckle), dû à la nature du signal radar mesuré par le capteur au moment de l'acquisition.

Selon la figure 6, le procédé de calage d'au moins la première image optique 19 nécessite une sélection de points tridimensionnels 46, 48, 50 dénommés points de calage 46, 48, 50 associés au premier modèle 3D 40. Chaque point de calage 46, 48, 50 comporte des coordonnées 3D $X_{46}$, $Y_{46}$, $Z_{46}$, $X_{48}$, $Y_{48}$, $Z_{48}$, $X_{50}$, $Y_{50}$, $Z_{50}$ relatives au référentiel du premier modèle 3D 40. À cet égard, le procédé de calage d'au moins la première image optique 19 comprend une sélection des points de calage 46, 48, 50 sur chaque modèle 3D 40 obtenu à partir d'au moins la première aire d'intérêt 42. Les critères de sélections sont essentiellement relatifs à la confiance accordée dans la validité de l'appariement du couple d'images optiques 19, 23 stéréoscopiques. Le niveau de confiance est généralement quantifié par un algorithme d'appariement calculant un score de corrélation entre chaque point de la première et de la seconde image optique 19, 23, et éventuellement par des heuristiques liées à la morphologie du terrain telles que par exemple et de manière non limitative, la faible pente du terrain modélisé. Par conséquent, une sélection automatique des points de calage 46, 48, 50 est possible selon l'invention.

Plus particulièrement, les critères de sélection reposent essentiellement sur la fiabilité de l'appariement du couple d'images optiques 19, 23. Cette fiabilité est donnée par le score de corrélation ou encore dénommé indice de confiance pour chaque point 46, 48, 50 obtenu par le processus d'appariement stéréoscopique encore dénommée processus de concordances stéréoscopiques. En général, plus le score est élevé, plus l'appariement des deux points associés chacun à une image optique 19, 23 du couple stéréoscopique d'images 19, 23 est fiable. Selon l'invention, le critère relatif à la fiabilité de l'appariement est de préférence également associé à une heuristique de sélection reposant sur la pente locale du terrain modélisé au point considéré. En pratique, les surfaces localement planes sont plus faciles à apparier. D'une façon générale, la sélection de points sur des zones planes est privilégiée. D'autres heuristiques sont possibles, telles que par exemple et de manière non limitative, la texture des images optiques, plus particulièrement, une texture bien marquée sur les images optiques 19, 23, c'est-à-dire des zones à fort contraste radiométrique sont privilégiées.

Le nombre de points de calage 46, 48, 50 sélectionné est également à considérer avec attention. A minima, un point du premier modèle 3D 40 issue de la première aire d'intérêt 42, est indispensable au procédé de calage d'au moins la première image optique 19. De préférence, afin de prévenir un appariement imprécis du couple d'image 19, 23 stéréoscopique en un unique point sélectionné, une sélection d'une pluralité de points permettant une certaine redondance est privilégiée.

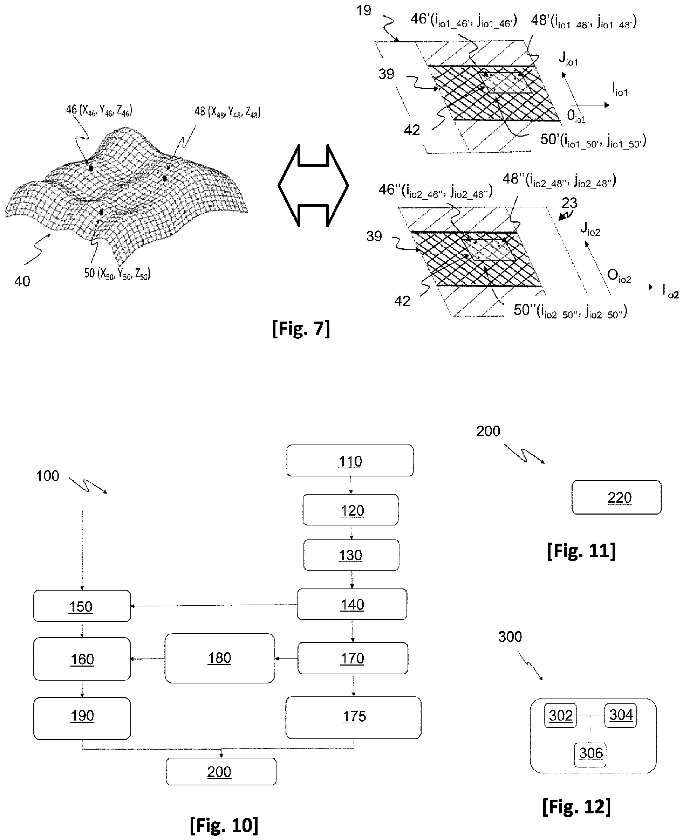

Selon la figure 7, les points de calage 46, 48, 50 sélectionnés sur le premier modèle 3D 40, correspondent à des points dits points de liaison 46', 48', 50' de la première image optique 19 et à des points de liaison 46", 48", 50" de la seconde image optique 23. Plus particulièrement, il convient de noter que le premier modèle 3D 40 est une représentation tri dimensionnelle de la première aire d'intérêt 42 sélectionnée sur la zone de chevauchement 39 des emprises au sol des images optiques stéréoscopiques 19, 23 avec l'emprise au sol de l'image SAR de référence 35. De plus et tel qu'exposé à la figure 3, le premier modèle 3D 40 est obtenu par un traitement des images optiques 19, 23 du couple stéréoscopique selon un traitement de concordances stéréoscopiques de la première image optique 19 et de la seconde image optique 23.

À cet effet, et selon la figure 7, chaque point de calage 46, 48, 50 sélectionné sur le premier modèle 3D 40 correspond à un couple stéréoscopique de pixels 46', 46", 48', 48", 50', 50" du couple stéréoscopique d'images optiques 19, 23. Chaque pixel de la première image optique 19 et chaque pixel de la seconde image optique 23 correspondant aux points de calage 46, 48, 50 sélectionnés, comporte donc respectivement des coordonnées images dites coordonnées d'images optiques $I_{io1\_46'}$, $J_{io1\_46'}$, $I_{io1\_48'}$, $J_{io1\_48'}$, $I_{io1\_50'}$, $J_{io1\_50'}$ dans la première image optique 19, et des coordonnées d'images optiques $I_{io2\_46''}$, $J_{io2\_46''}$, $I_{io2\_48''}$, $J_{io2\_48''}$, $I_{io2\_50''}$, $J_{io2\_50''}$ dans la seconde image optique 23 obtenues par projection des points de calage sélectionnés dans le premier modèle 3D dans le référentiel image de chaque image du couple stéréoscopique d'images optiques 19, 23.

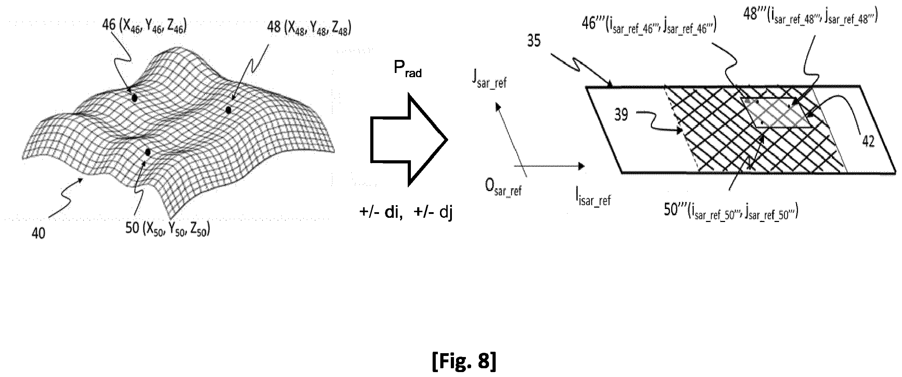

Selon la figure 8, le procédé de calage d'au moins la première image optique 19 nécessite la détermination de points de liaisons de l'au moins une image SAR de référence 35 à partir des points de calage 46, 48, 50 sélectionnés sur le premier modèle 3D 40. Il est à noter que le premier modèle 3D 40 est une représentation tri dimensionnelle de la première aire d'intérêt 42 sélectionnée sur la zone de chevauchement 39 des emprises au sol des images optiques stéréoscopiques 19, 23 avec l'emprise au sol de l'au moins une image SAR de référence 35.

À cet effet, une fonction de projection radar $P_{rad}$ prenant en compte les paramètres d'acquisition radar tel que par exemple et de manière non limitative la trajectoire du capteur radar SAR 32, permet de déterminer des points de liaison radar. Selon l'invention, l'application du décalage géométrique di, dj sur les coordonnées des points de liaison radar permet d'obtenir les coordonnées $i_{sar\_ref\_46'''}$, $i_{sar\_ref\_46'''}$, $i_{sar\_ref\_48'''}$, $j_{sar\_ref\_48'''}$, $i_{sar\_ref\_50'''}$, $j_{sar\_ref\_50'}$ de points de liaisons, dit points de liaison radar corrigés 46''', 48''', 50''' nécessaire au procédé de calage d'au moins la première image optique 19 selon l'invention.

Selon la figure 7 et selon la figure 8, le procédé de calage d'au moins la première image optique 19 a permis de projeter les points de calage 46, 48, 50 sélectionnés sur le premier modèle 3D 40, dans le référentiel image de la première image optique 19, de la seconde image optique 23 et de l'au moins une image SAR de référence 35.

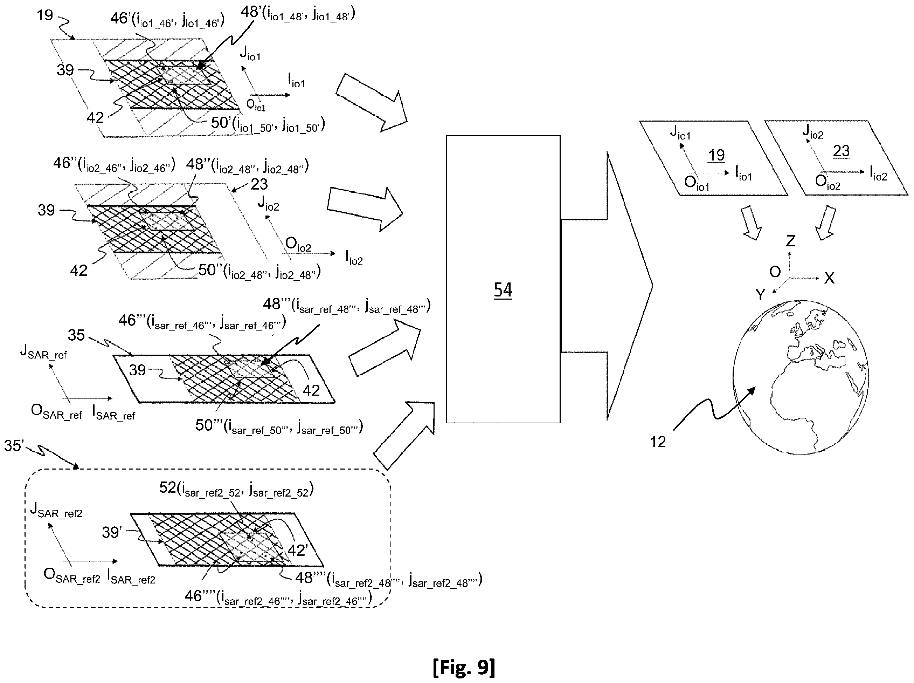

Selon la figure 9, le procédé de calage d'au moins la première image optique 19 permet la localisation précises des images optiques 19, 23 du couple stéréoscopique dans le référentiel objet O,X,Y,Z, à partir de l'ensemble des points de liaison déterminés précédemment, c'est-à-dire à partir des points de liaison 46', 48', 50' de la première image optique 19, des points de liaison 46", 48", 50" de la seconde image optique 23 et des points de liaison radar corrigés 46''', 48''', 50''' de de l'au moins une image SAR de référence 35.

Selon un premier mode de réalisation, le procédé de calage d'au moins la première image optique 19 nécessite un unique procédé d'ajustement de faisceaux 54 ou selon la terminologie anglo-saxonne communément utilisée, un unique procédé de 'bundle adjustment', appliqué de manière simultanée aux images optiques 19, 23 du couple stéréoscopique et à l'au moins une image SAR de référence 35. À cet effet, selon ce premier mode de réalisation, l'unique procédé d'ajustement de faisceaux 54 sera dénommée 'procédé d'ajustement de faisceaux simultané'.

Selon ce procédé d'ajustement de faisceaux simultané, les seules mesures considérées sont les points de liaison 46', 48', 50' de la première image optique 19, les points de liaison 46", 48", 50" de la seconde image optique 23 et les points de liaison radar corrigés 46''', 48''', 50''' de l'au moins une image SAR de référence 35. Conformément au principe d'ajustement de faisceaux, à chaque mesure est associée une incertitude à priori, qui permet d'estimer simultanément toutes les variables dans un cadre probabiliste, telles que par exemple et de manière non limitative, les coordonnées des points images, les coordonnées des points terrain et les paramètres de prise de vue de chaque image utilisée. Il est à noter que l'incertitude sur les paramètres de position associés à l'au moins une images SAR de références 35 est très faible, l'au moins une image SAR de références 35 étant nativement précises. L'incertitude sur les paramètres de position associés aux images SAR étant plus faible que celle sur les paramètres des images optique, elle induit une contrainte forte sur la solution du procédé d'ajustement de faisceaux simultané.

À cet effet, le procédé d'ajustement de faisceaux simultané des images optiques 19, 23 du couple stéréoscopique et d'au moins une image SAR de référence 35 est basé sur les mesures préalablement estimées, à savoir :

$\hat{X}_{3D\_i}, \hat{Y}_{3D\_i}, \hat{Z}_{3D\_i}$ : coordonnées terrain estimées des points de calage sélectionnés.

$x_{ij}, y_{ij}$ : coordonnées des points de liaison 46', 46", 46''', 48', 48", 48''' 50', 50", 50''' dans chaque image optique 19, 23 du couple stéréoscopique et dans l'au moins une image SAR de référence 35.

$\hat{P}_{ij}$ : paramètres de prise de vue estimés de chaque image optique 19, 23 du couple stéréoscopique et de l'au moins une image SAR de référence 35.

$\sigma_X, \sigma_Y, \sigma_Z$ : incertitudes sur les mesures des coordonnées terrain.

$\sigma_x, \sigma_y$ : incertitudes sur les mesures des coordonnées images (qui peuvent être différentes pour les images optiques et SAR).

$\sigma_p$ : incertitudes sur la mesure des paramètres de prise de vue des images 19, 23 du couple stéréoscopique et de l'au moins une image SAR de référence 35, cette incertitude étant différentes pour les images optiques et les images SAR.

Le procédé d'ajustement de faisceaux simultané permet d'estimer simultanément les variables suivantes :

$X_i$, $Y_i$, $Z_i$: coordonnées terrain recalés des points de calage sélectionnés.
$P_{ij}$: paramètres de prise de vue corrigés des images optiques 19, 23 du couple stéréoscopique et de l'au moins une image SAR de références 35.
$xy(P_{ij}, X_i, Y_i, Z_i)$ : projection des points de calage dans les images optiques 19, 23 du couple stéréoscopique et de l'au moins une image SAR de références 35.

Le procédé d'ajustement de faisceaux simultané, consiste à estimer les variables, c'est-à-dire les coordonnées terrain des points de calage et les paramètres de prise de vue, minimisant l'expression mathématique (5) suivante :

$$\sum_i \left(\frac{X_i - \hat{X}_i}{\sigma_X}\right)^2 + \left(\frac{Y_i - \hat{Y}_i}{\sigma_Y}\right)^2 + \left(\frac{Z_i - \hat{Z}_i}{\sigma_Z}\right)^2 + \sum_{i,j} \left(\frac{P_{ij} - \hat{P}_{ij}}{\sigma_p}\right)^2$$
$$+ \sum_{i,j} \left(\frac{x(P_{0j}, P_{nj}, X_i, Y_i, Z_i) - \hat{x}_{ij}}{\sigma_x}\right)^2 + \sum_{i,j} \left(\frac{y(P_{0j}, P_{nj}, X_i, Y_i, Z_i) - \hat{y}_{ij}}{\sigma_y}\right)^2$$

pour laquelle, 'i' représente le nombre de points de calage sélectionnés et l'indice de chaque point de calage et 'j' représente le nombre d'images optiques 19, 23 et d'images SAR de référence 35 considérées.

Un avantage du procédé d'ajustement de faisceaux simultané appliqué au procédé de calage d'au moins la première image optique 19 est de modéliser simultanément tous les paramètres et leurs incertitudes à priori. La solution globale obtenue, reposant sur un cadre conceptuel plus puissant, est plus robuste et précise. De plus, ce cadre permet une évaluation de la qualité à postériori de l'estimation obtenue.

Enfin un autre avantage du procédé d'ajustement de faisceaux simultané appliqué au procédé de calage d'au moins la première image optique 19 réside dans sa flexibilité d'utilisation : il est en effet possible d'utiliser un nombre quelconque d'images optiques 19, 23 et d'images SAR de référence 35, 35', et il n'est pas nécessaire que chaque point de calage soit vu dans plus d'une image SAR de référence 35, 35'. Dans le cas où une seule image SAR de référence 35 est utilisée, le calage de la première image optique 19 est dépendant de la résolution du modèle 3D 40 obtenu. Avec un modèle 3D très bien résolu en altitude, les coordonnées 3D des points de calage sont suffisamment définies pour que le calage des images optiques soit satisfaisant. Dans le cas contraire, les coordonnées $X_{46}$, $Y_{46}$, $Z_{46}$, $X_{48}$, $Y_{48}$, $Z_{48}$, $X_{50}$, $Y_{50}$, $Z_{50}$ 3D des points de calage 46, 48, 50 peuvent être imparfaitement définies et il peut subsister un degré de liberté dans la localisation des images optiques 19, 23. Il arrive fréquemment que l'altitude de points remarquables visibles dans les images optiques 19, 23 soit connue précisément (littoral par exemple). L'introduction de ces points, dont seules les coordonnées images et l'altitude sont connues, dans l'ajustement de faisceaux permet de supprimer ce degré de liberté résiduel et, ainsi, pallier l'absence d'une autre image SAR de référence 35'. Dans le cas où deux ou plusieurs images SAR de référence 35, 35' sont utilisées, avec des configurations géométriques d'acquisition bien distinctes, en particulier des angles d'incidence différents, même si chaque point n'est pas vu simultanément sur plusieurs images, les contraintes géométriques induites dans le procédé d'ajustement de faisceaux simultané suppriment le degré de liberté résiduel observé dans le cas d'une seule image SAR de référence 35.

Selon ce mode de réalisation du procédé de calage utilisant deux voire plusieurs images SAR de référence 35, 35', la sélection comme image SAR de référence d'images acquises par tout satellite radar à synthèse d'ouverture sur la zone considérée selon des directions de visée opposées constitue une configuration géométrique suffisante pour obtenir un angle stéréoscopique (B/H) adapté au présent procédé. Ainsi, on peut citer, selon un premier exemple, l'utilisation d'au moins une image SAR acquise par un satellite radar à synthèse d'ouverture sur la zone considérée selon une direction de visée orientée vers l'Est et d'au moins une image SAR acquise par un satellite radar à synthèse d'ouverture sur la zone considérée selon une direction de visée orientée vers l'Ouest, comme une configuration géométrique suffisante pour obtenir un angle stéréoscopique B/H adapté au présent procédé. Selon un autre exemple relatif au satellite radar à synthèse d'ouverture TerraSAR-X, l'utilisation comme images SAR de référence d'une image SAR acquise par le satellite en mode ascendant sur la zone considérée et d'une autre image SAR acquise par le satellite en mode descendant sur la zone considérée, selon le sens de passage du satellite, est également une configuration géométrique suffisante pour obtenir un angle stéréoscopique (B/H) adapté au présent procédé.

L'utilisation par le procédé d'une pluralité des images SAR de référence 35, 35' aux configurations géométriques distinctes, permet donc de multiplier le nombre de points de calage 46, 48, 50 issus de modèles 3D 40 non nécessairement obtenus sur les mêmes aires d'intérêt et non nécessairement identiques d'une image SAR de référence 35 à une autre et d'améliorer ainsi la précision de calage des images optiques 19, 23. Enfin l'utilisation par le procédé d'une pluralité de couple stéréoscopique d'images optiques 19, 23 sur la même zone de la surface de la Terre permet de multiplier, pour un même point au sol, le nombre de points de liaison dans toutes les images SAR de référence 35, 35' utilisées et dans toutes les images optiques 19, 23 des couples stéréoscopiques afin d'affiner plus encore la précision de calage. L'utilisation par le procédé d'une pluralité de couple stéréoscopique d'images optiques 19, 23 disponibles sur la même zone de la surface de la Terre offre également l'avantage de pouvoir caler de manière simultanée l'ensemble des images optiques 19, 23 des couples stéréoscopiques sélectionnées au travers d'une seule et même étape d'alignement de faisceaux simultanée mise en oeuvre par le procédé, améliorant ainsi la précision et la cohérence du calage des images optiques 19, 23 entre elles.

De manière alternative au procédé de calage d'au moins la première image optique 19 utilisant un unique procédé d'ajustement de faisceaux simultané, dans le cas de deux voire plusieurs images SAR de référence 35, 35', il est possible de réaliser le procédé de calage selon une première étape de triangulation stéréoscopique des points de liaisons des images SAR de référence 35, 35' de sorte à obtenir des coordonnées terrain représentatifs de ces points de liaisons dans le référentiel objet, puis d'exécuter un procédé d'ajustement de faisceaux classique sur les images optiques en utilisant ces coordonnées terrain calculés comme autant de points d'appui (Ground Control Point ou GCP en anglais) utilisés comme paramètres dans le procédé d'ajustement de faisceaux classique.

Sur la base du procédé de calage tel que décrit selon l'invention, il est possible d'envisager tout type d'application sur une image optique 19 avec un gain en précision absolu comme par exemple et de manière non limitative :

- Produire un modèle 3D par appariement stéréoscopique à la précision des images optiques 19, 23 hautes résolutions recalées.
- Réaliser une ortho-rectification des images optiques 19, 23 dans un référentiel géographique ou cartographique donné.
- Réaliser tout type de traitement d'images de type classification terrain ou encore télédétection.

Selon la figure 10, le procédé de calage 100 d'au moins la première image optique 19 décrit aux figures précédentes peut par exemple et de manière non limitative comprendre une pluralité d'étapes.

Le procédé 100 doit comprendre une étape d'obtention 110 d'un couple d'image stéréoscopique comprenant la première image optique 19 et une seconde image optique 23 de sorte que l'emprise au sol de la première image optique 19 et l'emprise au sol de la seconde image optique 23 comprennent une emprise au sol commune 25. Ladite emprise au sol commune 25 correspond à la zone commune 24 de la surface de la Terre de la zone 18 de la surface de la Terre couverte par la première image optique 19 avec la zone 22 de la surface de la Terre couverte par la seconde image optique 23.

Le procédé 100 doit comprendre une étape d'obtention 120 d'au moins une image SAR de référence 35, issue d'un capteur radar 32 à synthèse d'ouverture, dénommé capteur radar SAR 32. L'emprise au sol 34 de l'au moins une image SAR de référence 35 comporte une zone de chevauchement 39 avec l'emprise au sol de chaque image optique 19, 23 du couple stéréoscopique, la zone de chevauchement 39 correspondant à la zone de recouvrement 38 entre la zone 34 de la surface de la Terre couverte par l'image SAR de référence et les zones 18 et 22 de la surface de la Terre le couple d'image optiques 19, 23.

Une étape suivant les deux étapes précédentes peut comprendre la sélection 130 d'au moins une première aire d'intérêt 42 à partir de la zone de recouvrement 38 correspondant à la zone de chevauchement 39. La dite au moins première aire d'intérêt 42 est une zone restreinte de zone de chevauchement 39. Comme exposé à la figure 3, la sélection de l'au moins une première aire d'intérêt 42 peut aussi bien être effectuée de manière manuelle par un opérateur que de manière automatique.

Une des étapes suivantes consiste en une étape d'obtention 140 d'un premier modèle 3D 40 à partir de la sélection de l'au moins une première aire d'intérêt 42 selon l'étape précédente. L'obtention du premier modèle 3D 40 permet au procédé 100 de comprendre une étape de calcul 150 d'au moins une image SAR simulée 44, notamment en combinant les informations du premier modèle 3D 40 et les paramètres du capteur radar SAR 32 ayant permis l'acquisition de l'au moins une image SAR de référence 35 correspondante.

Il est à noter que l'étape d'obtention 140 d'un modèle 3D peut être effectuée à partir de toute la zone de chevauchement 39 préalablement à l'étape de sélection 130 d'au moins une première aire d'intérêt 42.

L'étape de calcul 150 et l'obtention de l'au moins une image SAR simulée 44 sur l'au moins une première aire d'intérêt 42, permet au procédé 100 de comprendre une étape d'estimation 160 de la correction géométrique di, dj, entre l'au moins une image SAR simulée 44 et l'image SAR de référence 35 correspondante.

L'obtention du premier modèle 3D 40 permet également au procédé 100 de comprendre une étape de sélection 170 d'au moins un point 3D dit point de calage 46 sur le modèle premier modèle 3D 40.

Le procédé 100 de calage géométrique d'au moins la première image optique 19 comprend une étape de projection radar 180 dudit au moins un point de calage 46 dans l'au moins une image SAR de référence 35 de sorte à obtenir au moins un point de liaison radar. Le procédé 100 comprend une étape supplémentaire de correction 190 du au moins un point de liaison radar par application du décalage di, dj sur ledit au moins un point de liaison radar de sorte à obtenir au moins un point de liaison radar corrigé 46′″ dans l'au moins une image SAR de référence 35.

Le procédé 100 de calage géométrique d'au moins la première image optique 19 comprend également une étape de détermination 175 d'au moins un couple de points de liaison 46′, 46″ du couple stéréoscopique d'images optiques 19, 23 par projection dudit au moins un point de calage 46 dans le référentiel de la première image optique 19 et dans le référentiel de la seconde image optique 23.

Enfin, le procédé 100 de calage géométrique d'au moins la première image optique 19 comprend une dernière étape de calage 200 géométrique d'au moins la première image optique 19 à partir du au moins un point de liaison radar corrigé 46′″ de l'au moins une image SAR de référence 35 et d'au moins un couple de points de liaison 46′, 46″ correspondants du couple stéréoscopique d'images optiques 19, 23.

Selon un mode de réalisation alternatif du procédé 100 de calage géométrique, cette dernière étape de calage 200 géométrique est réalisée de manière simultanée à partir d'au moins le couple de points de liaison 46′, 46″ optique et de l'au moins un point de liaison radar corrigé 46′″ sur les deux images du couple stéréoscopique d'images optiques 19, 23.

Plus particulièrement, selon la figure 11 et selon une première alternative, l'étape de calage 200 géométrique du procédé 100 de calage comprend une unique étape dite d'ajustement 220 de faisceaux simultané appliquée simultanément aux images optiques 19, 23 et à l'au moins une image SAR de référence 35.

Selon la figure 12, un système 300 de mise en oeuvre du procédé 100 de calage d'au moins la première image optique 19 peut comprendre une unité de traitement d'informations 302 de type processeur tel que par exemple et de manière non limitative, un processeur spécialisé dans le traitement du signal, ou encore un microcontrôleur, ou tout autre type de circuit permettant d'exécuter des instructions de type logicielles. Le système 300 comporte également de la mémoire vive 304 associée à l'unité de traitement d'informations 302. L'unité de traitement d'informations 302 est configurée pour exécuter un programme, dit encore programme d'ordinateur, comprenant des instructions mettant en oeuvre le procédé 100 de calage d'au moins la première image optique 19 décrit précédemment. Les instructions sont chargées dans la mémoire vive du système 300 à partir de tout type de supports de stockage 306 tels que par exemple et de manière non limitative, une mémoire de type non volatile ou une mémoire externe telle qu'une carte mémoire amovible de stockage. Les instructions peuvent être également chargées par l'intermédiaire d'une connexion à un réseau de communication.

Alternativement, le programme d'ordinateur, comprenant des instructions mettant en oeuvre le procédé 100 de calage d'au moins la première image optique 19 peut également être implémenté sous forme matérielle par une machine ou par un circuit intégré propre à une application ou encore par un circuit électronique de type réseau logique programmable.

Il doit être bien entendu que la description détaillée de l'objet de l'invention, donnée uniquement à titre d'illustration, ne constitue en aucune manière une limitation, les équivalents techniques étant également compris dans le champ de la présente invention.

## Revendications

1. Procédé de calage (100) d'au moins une première image optique (19) de la surface de la Terre (12) prise par un capteur optique (16) embarqué à bord d'un satellite (14) ou à bord d'un aéronef comprenant les étapes de :

   obtention (110) d'un couple stéréoscopique d'images optiques (19, 23) comportant la première image optique (19) ;
   obtention (120) d'au moins une image radar de référence (35) prise par un capteur radar (32) à synthèse d'ouverture, l'emprise au sol de l'au moins un image radar de référence (35) comportant une zone de chevauchement (39) avec l'emprise au sol des images du couple stéréoscopique d'images optiques (19, 23) ;
   sélection (130) d'au moins une aire d'intérêt (42) sur la zone de chevauchement (39) ;
   le procédé (100) comprenant pour chacune des aires d'intérêt (42) :

      obtention (140) d'un modèle 3D (40) sur l'aire d'intérêt (42) à partir du couple stéréoscopique d'images optiques (19, 23) ;
      calcul (150) d'au moins une image radar simulée (44) sur l'aire d'intérêt (42) à partir du modèle 3D (40) obtenu et les paramètres d'acquisitions de l'au moins une image radar de référence (35) ;
      estimation (160) d'un décalage géométrique (di, dj) entre l'au moins une image radar simulée (44) et l'au moins une image radar de référence (35) ;
      sélection (170) d'au moins un point de calage (46) sur le modèle 3D (40) de l'aire d'intérêt (42) ;
      projection (180) du au moins un point de calage (46) dans l'au moins une image radar de référence (35) par une fonction de projection radar ($P_{rad}$) de sorte à obtenir au moins un point de liaison radar ; correction (190) du au moins un point de liaison radar par application du décalage géométrique (di, dj) estimée de sorte à obtenir au moins un point de liaison radar corrigé (46‴) détermination (175) d'au moins un couple de points de liaison (46', 46") du couple stéréoscopique d'images optiques (19, 23) par projection dudit au moins un point de calage (46) dans chaque image dudit couple stéréoscopique d'images optiques (19, 23) ;

le procédé (100) comprenant une étape de calage (200) géométrique de la dite au moins une première image optique (19) à partir d'au moins le couple de points de liaison (46', 46") optique et de l'au moins un point de liaison radar corrigé (46‴).

2. Procédé de calage (100) selon la revendication précédente **caractérisé en ce que** l'étape de calage (200) géométrique comprend une unique étape d'ajustement (220) de faisceaux appliquée simultanément au couple stéréoscopique d'images optiques (19, 23) et à l'au moins une image radar de référence (35).

3. Procédé de calage (100) selon l'une quelconque des revendications précédentes **caractérisé en ce que** l'étape estimation (160) du décalage géométrique (di, dj) comprend la maximisation de la probabilité conditionnelle $P(di, dj/SAR)$ du décalage (di, dj) connaissant l'au moins une image radar de référence (35).

4. Procédé de calage (100) selon l'une quelconque des revendications précédentes **caractérisé en ce que** l'étape de calcul (150) de l'au moins une mage radar simulée (44) comprend la détermination d'un facteur de réflectance (R) moyen de l'au moins une image radar de référence (35) calculé sur l'aire d'intérêt (42) considérée pour le calcul de l'au moins une mage radar simulée (44)

5. Procédé de calage (100) selon l'une quelconque des revendications précédentes **caractérisé en ce que** l'au moins une aire d'intérêt (42) de la zone de chevauchement (39) est une zone restreinte de la zone de chevauchement (39).

6. Procédé de calage (100) selon l'une quelconque des revendications précédentes **caractérisé en ce que** l'étape de sélection (130) d'au moins une aire d'intérêt (42) comporte au moins deux aires d'intérêt (42, 43), de préférence quatre aires d'intérêt.

7. Procédé de calage (100) selon l'une quelconque des revendications précédentes **caractérisé en ce que** l'étape d'obtention d'un modèle 3D (140) est réalisée sur la totalité de la zone de chevauchement (39) préalablement à l'étape (130) de sélection d'au moins une aire d'intérêt (42) sur la zone de chevauchement (39),

8. Procédé de calage (100) selon l'une quelconque des revendications 1 à 7 **caractérisé en ce que** l'étape de calage (200) géométrique à partir d'au moins le couple de points de liaison (46', 46") optique et de l'au moins un point de liaison radar corrigé (46‴) est réalisée sur les deux images du couple stéréoscopique d'images optiques (19, 23) de manière simultanée.

9. Système (300) de calage géométrique d'au moins une image optique (19) pour la mise en oeuvre du procédé (100) de l'une quelconque des revendications précédentes **caractérisé en ce qu'**i il comporte une unité de traitement d'informations (302) et une mémoire vive (304) associée à l'unité de traitement d'informations (302), ladite mémoire vive (304) comprenant des instructions de mise en oeuvre du procédé (100), la dite unité de traitement d'informations (302) étant configurée pour exécuter les instructions mettant en oeuvre le procédé (100).

10. Produit programme d'ordinateur comprenant des instructions qui, lorsque le programme est exécuté par un ordinateur, conduisent celui-ci à mettre en oeuvre les étapes du procédé (100) de calage d'au moins une image optique (19) selon l'une quelconque des revendications 1 à 8.

11. Support de stockage (306) d'informations stockant un programme d'ordinateur comprenant des instructions pour implémenter, par un processeur (302), le procédé (100) selon l'une quelconque des revendications 1 à 8, lorsque ledit programme est lu et exécuté par ledit processeur (302).

**Patentansprüche**

1. Verfahren zur Referenzierung (100) mindestens eines ersten optischen Bildes (19) der Oberfläche der Erde (12), das von einem optischen Sensor (16) aufgenommen ist, der an Bord eines Satelliten (14) oder an Bord eines Luftfahrzeugs geladen ist, welches die Schritte umfasst zum:

Erhalten (110) eines stereoskopischen Paares an optischen Bildern (19, 23), welches das erste optische Bild (19) beinhaltet;

Erhalten (120) mindestens eines Referenz-Radarbildes (35), das durch einen Radarsensor (32) mit synthetischer Apertur aufgenommen ist, wobei die überdeckte Grundfläche des mindestens einen Referenz-Radarbildes (35) eine Überschneidungszone (39) mit der überdeckten Grundfläche der Bilder des stereoskopischen Paares an optischen Bildern (19, 23) beinhaltet;

Auswählen (130) mindestens einer Fläche von Interesse (42) in der Überschneidungszone (39);

wobei das Verfahren (100) für jede der Flächen von Interesse (42) umfasst:

Erhalten (140) eines 3D-Modells (40) auf der Fläche von Interesse (42) aus dem stereoskopischen Paar an optischen Bildern (19, 23);

Berechnen (150) mindestens eines simulierten Radarbildes (44) auf der Fläche von Interesse (42) aus dem erhaltenen 3D-Modell (40) und den Aufnahmeparametern des mindestens einen Referenz-Radarbildes (35);

Schätzen (160) eines Geoversatzes (di, dj) zwischen dem mindestens einen simulierten Radarbild (44) und dem mindestens einen Referenz-Radarbild (35);

Auswählen (170) mindestens eines Referenzierungspunkts (46) auf dem 3D-Modell (40) der Fläche von Interesse (42);

Projizieren (180) des mindestens einen Referenzierungspunkts (46) in dem mindestens einen Referenz-Radarbild (35) durch eine Radarprojektionsfunktion ($P_{rad}$), um mindestens einen Radarverbindungspunkt zu erhalten;

Korrigieren (190) des mindestens einen Radarverbindungspunkts durch Anwenden des geschätzten Geoversatzes (di, dj), um mindestens einen korrigierten Radarverbindungspunkt (46‴) zu erhalten,

Bestimmen (175) mindestens eines Paares an Verbindungspunkten (46', 46") des stereoskopischen Paares an optischen Bildern (19, 23) durch Projizieren des mindestens einen Referenzierungspunkts (46) in jedem Bild des stereoskopischen Paares an optischen Bildern (19, 23);

wobei das Verfahren (100) einen Georeferenzierungsschritt (200) des mindestens einen ersten optischen Bildes (19) aus mindestens dem optischen Paar an Verbindungspunkten (46', 46") und dem mindestens einen korrigierten Radarverbindungspunkt (46‴) umfasst.

2.  Verfahren zur Referenzierung (100) nach dem vorstehenden Anspruch, **dadurch gekennzeichnet, dass** der Georeferenzierungsschritt (200) einen einzigen Anpassungsschritt (220) von Strahlen umfasst, der gleichzeitig auf das stereoskopische Paar an optischen Bildern (19, 23) und das mindestens eine Referenz-Radarbild (35) angewandt wird.

3.  Verfahren zur Referenzierung (100) nach einem der vorstehenden Ansprüche, **dadurch gekennzeichnet, dass** der Schritt des Schätzens (160) des Geoversatzes (di, dj) die Maximierung der bedingten Wahrscheinlichkeit *P(di, dj/SAR)* des Versatzes (di, dj) unter Kenntnis des mindestens einen Referenz-Radarbildes (35) umfasst.

4.  Verfahren zur Referenzierung (100) nach einem der vorstehenden Ansprüche, **dadurch gekennzeichnet, dass** der Schritt des Berechnens (150) des mindestens einen simulierten Radarbildes (44) das Bestimmen eines mittleren Reflexionsfaktors (R) des mindestens einen auf der Fläche von Interesse (42) berechneten Referenz-Radarbildes (35) umfasst, das zum Berechnen des mindestens einen simulierten Radarbildes (44) angenommen wird.

5.  Verfahren zur Referenzierung (100) nach einem der vorstehenden Ansprüche, **dadurch gekennzeichnet, dass** die mindestens eine Fläche von Interesse (42) der Überschneidungszone (39) eine begrenzte Zone der Überschneidungszone (39) ist.

6.  Verfahren zur Referenzierung (100) nach einem der vorstehenden Ansprüche, **dadurch gekennzeichnet, dass** der Schritt des Auswählens (130) mindestens einer Fläche von Interesse (42) mindestens zwei Flächen von Interesse (42, 43), vorzugsweise vier Flächen von Interesse beinhaltet.

7.  Verfahren zur Referenzierung (100) nach einem der vorstehenden Ansprüche, **dadurch gekennzeichnet, dass** der Schritt des Erhaltens eines 3D-Modells (140) auf der Gesamtheit der Überschneidungszone (39) vor dem Schritt (130) des Auswählens mindestens einer Fläche von Interesse (42) in der Überschneidungszone (39) durchgeführt wird.

8. Verfahren zur Referenzierung (100) nach einem der Ansprüche 1 bis 7, **dadurch gekennzeichnet, dass** der Georeferenzierungsschritt (200) aus mindestens dem optischen Paar an Verbindungspunkten (46', 46") und dem mindestens einen korrigierten Radarverbindungspunkt (46‴) gleichzeitig an den beiden Bildern des stereoskopischen Paares an optischen Bildern (19, 23) durchgeführt wird.

9. System (300) zur Georeferenzierung mindestens eines optischen Bildes (19) zum Umsetzen des Verfahrens (100) nach einem der vorstehenden Ansprüche, **dadurch gekennzeichnet, dass** es eine Informationsverarbeitungseinheit (302) und einen Arbeitsspeicher (304) beinhaltet, welcher der Informationsverarbeitungseinheit (302) zugeordnet ist, wobei der Arbeitsspeicher (304) Anweisungen zum Umsetzen des Verfahrens (100) umfasst, wobei die Informationsverarbeitungseinheit (302) konfiguriert ist, um die Anweisungen auszuführen, die das Verfahren (100) umsetzen.

10. Computerprogrammprodukt, umfassend Anweisungen, die wenn das Programm von einem Computer ausgeführt wird, denselben dazu bringen, die Schritte des Verfahrens (100) zur Referenzierung mindestens eines optischen Bildes (19) nach einem der Ansprüche 1 bis 8 umzusetzen.

11. Speichermedium (306) für Informationen, das ein Computerprogramm speichert, das Anweisungen zum Implementieren durch einen Prozessor (302) des Verfahrens (100) nach einem der Ansprüche 1 bis 8 umfasst, wenn das Programm von dem Prozessor (302) gelesen und ausgeführt wird.

**Claims**

1. A method (100) for referencing at least one first optical image (19) of the surface of the Earth (12) taken by an optical sensor (16) on board a satellite (14) or on board an aircraft comprising the steps of:

    obtaining (110) a stereoscopic optical image pair (19, 23) including the first optical image (19);
    obtaining (120) at least one reference radar image (35) taken by a synthetic aperture radar sensor (32), the surface area covered on the ground by the at least one reference radar image (35) including an overlapping area (39) with the surface area covered on the ground by the images of the stereoscopic optical image pair (19, 23);
    selecting (130) at least one area of interest (42) on the overlapping area (39);
    the method (100) comprising for each of the areas of interest (42):

       obtaining (140) a 3D model (40) on the area of interest (42) from the stereoscopic optical image pair (19, 23);
       calculating (150) at least one simulated radar image (44) on the area of interest (42) from the obtained 3D model (40) and the acquisition parameters of the at least one reference radar image (35);
       estimating (160) a geometric offset (di, dj) between the at least one simulated radar image (44) and the at least one reference radar image (35);
       selecting (170) at least one reference point (46) on the 3D model (40) of the area of interest (42);
       projecting (180) the at least one reference point (46) in the at least one reference radar image (35) by a radar projection function ($P_{rad}$) so as to obtain at least one radar connection point;
       correcting (190) the at least one radar connection point by applying the estimated geometric offset (di, dj) so as to obtain at least one corrected radar connection point (46‴)
       determining (175) at least one pair of connection points (46', 46") of the stereoscopic optical image pair (19, 23) by projection of said at least one reference point (46) in each image of said stereoscopic optical image pair (19, 23);

    the method (100) comprising a step (200) of georeferencing of said at least one first optical image (19) from at least the pair of optical connection points (46', 46") and from the at least one corrected radar connection point (46‴).

2. The referencing method (100) according to the preceding claim, **characterised in that** the georeferencing step (200) comprises a single bundle adjustment step (220) applied simultaneously to the stereoscopic optical image pair (19, 23) and to the at least one reference radar image (35).

3. The referencing method (100) according to any one of the preceding claims, **characterised in that** the step (160) of estimating the geometric offset (di, dj) comprises maximising the conditional probability $P(di, dj/SAR)$ of the offset (di, dj) knowing the at least one reference radar image (35).

4. The referencing method (100) according to any one of the preceding claims, **characterised in that** the step (150) of calculating the at least one simulated radar image (44) comprises determining an average reflectance factor (R) of the at least one reference radar image (35) calculated on the area of interest (42) considered for the calculation of the at least one simulated radar image (44).

5. The referencing method (100) according to any one of the preceding claims, **characterised in that** the at least one area of interest (42) of the overlapping area (39) is a restricted area of the overlapping area (39).

6. The referencing method (100) according to any one of the preceding claims, **characterised in that** the step (130) of selecting at least one area of interest (42) includes at least two areas of interest (42, 43), preferably four areas of interest.

7. The referencing method (100) according to any one of the preceding claims, **characterised in that** the step of obtaining a 3D model (140) is carried out over the entire overlapping area (39) prior to the step (130) of selecting at least one area of interest (42) on the overlapping area (39).

8. The referencing method (100) according to any one of claims 1 to 7, **characterised in that** the georeferencing step (200) from at least the pair of optical connection points (46', 46") and the at least one corrected radar connection point (46''') is produced on the two images of the stereoscopic optical image pair (19, 23) simultaneously.

9. The system (300) for georeferencing of at least one optical image (19) for implementing the method (100) of any one of the preceding claims, **characterised in that** it includes an information processing unit (302) and a random access memory (304) associated with the information processing unit (302), said random access memory (304) comprising instructions for implementing the method (100), said information processing unit (302) being configured to execute the instructions implementing the method (100).

10. A computer program product comprising instructions which, when the program is executed by a computer, lead it to implement the steps of the method (100) for referencing at least one optical image (19) according to any one of claims 1 to 8.

11. An information storage medium (306) storing a computer program comprising instructions to implement, by a processor (302), the method (100) according to any one of claims 1 to 8, when said program is read and executed by said processor (302).

[Fig. 1]

[Fig. 2]

39 42 40 43

[Fig. 3]

40 32 44

[Fig. 4]

42

$J_{sar\_ref}$

$I_{sar\_ref}$

$O_{sar\_ref}$

35    39

44

$J_{sar\_sim} = J_{sar\_ref} \pm dj$

$I_{sar\_sim} = I_{sar\_ref} \pm di$

$O_{sar\_sim}$

**[Fig. 5]**

46 $(X_{46}, Y_{46}, Z_{46})$

48 $(X_{48}, Y_{48}, Z_{48})$

40

50 $(X_{50}, Y_{50}, Z_{50})$

**[Fig. 6]**

$19$

$46'(i_{io1\_46'}, j_{io1\_46'})$  $48'(i_{io1\_48'}, j_{io1\_48'})$

$39$

$42$

$J_{io1}$

$I_{io1}$

$O_{io1}$

$50'(i_{io1\_50'}, j_{io1\_50'})$

$46 (X_{46}, Y_{46}, Z_{46})$  $48 (X_{48}, Y_{48}, Z_{48})$

$40$

$50 (X_{50}, Y_{50}, Z_{50})$

$46''(i_{io2\_46''}, j_{io2\_46''})$  $48''(i_{io2\_48''}, j_{io2\_48''})$

$23$

$39$

$42$

$J_{io2}$

$O_{io2}$

$I_{io2}$

$50''(i_{io2\_50''}, j_{io2\_50''})$

**[Fig. 7]**

$100$

$110$

$120$

$130$

$150$

$140$

$160$

$180$

$170$

$190$

$175$

$200$

**[Fig. 10]**

$200$

$220$

**[Fig. 11]**

$300$

$302$  $304$

$306$

**[Fig. 12]**

[Fig. 8]

[Fig. 9]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012127028 A1

- US 2016259046 A1

**Littérature non-brevet citée dans la description**

- **HONGXING LIU et al.** Correction of positional errors and geometric distortions in topographie maps and DEMs using a rigorous SAR simulation technique. *Photogrammetric Engineering & Remote Sensing,* 01 Septembre 2004, 1031-1042